(19) Europäisches Patentamt
European Patent Office
Office européen des brevets

(11) Veröffentlichungsnummer: **0 098 601**
**A1**

# (12) EUROPÄISCHE PATENTANMELDUNG

(21) Anmeldenummer: **83106625.3**

(22) Anmeldetag: **06.07.83**

(51) Int. Cl.³: **C 07 F 9/22**, C 07 F 9/24, A 61 K 31/66

(30) Priorität: **06.07.82 DE 3225227**

(43) Veröffentlichungstag der Anmeldung: **18.01.84**
**Patentblatt 84/3**

(84) Benannte Vertragsstaaten: **IT**

(71) Anmelder: **Max-Planck-Gesellschaft zur Förderung der Wissenschaften e.V., Bunsenstrasse 10, D-3400 Göttingen (DE)**

(72) Erfinder: **Eibl, Hansjörg, Prof. Dr., Steinweg 51, D-3406 Bovenden (DE)**

(74) Vertreter: **Weickmann, Heinrich, Dipl.-Ing. et al, Patentanwälte Dipl.-Ing. H.Weickmann Dipl.-Phys.Dr. K. Fincke Dipl.-Ing. F.A. Weickmann Dipl.-Chem. B. Huber Dr.-Ing. H. Liska Dipl.-Phys.Dr. J. Prechtel Möhlstrasse 22, D-8000 München 86 (DE)**

## (54) Derivate des N.N-Bis-(2-chlor-äthyl)-phosphorsäureamids.

(57) Die Erfindung betrifft Derivate des N.N-Bis-(2-chlor-äthyl)phosphorsäureamids der allgemeinen Formel I

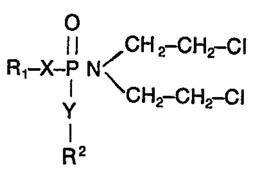

(I)

worin X und Y gleich oder verschieden sind und Sauerstoff oder $NR^3$ bedeuten, $R^1$ und $R^2$ gleich oder verschieden sind und $R^1$ den Rest $CH_2(OR^4)-CH_2-CH_2-$, $CH_2(OR^4)-CH(CH_3)-CH_2-$ oder $CH_2(OR^4)-CH(OR^5)-CH_2-$ bedeutet, und, wenn X eine $NR^3$-Gruppe ist, auch Wasserstoff sein kann, $R^2$ eine der Bedeutungen von $R^1$ besitzt oder Äthyl, Propyl, Allyl, Propenyl, Chloräthyl, Methyl oder Benzyl ist, $R^3$ Wasserstoff, Methyl, Äthyl, Propyl oder Allyl, und worin die Reste $R^4$ und $R^5$ gleich oder verschieden sind und einen Alkylrest R oder einen Acylrest –COR darstellen, wobei R eine geradkettige oder verzweigte gesättigte oder ungesättigte Alkylgruppe mit 1 bis 25 Kohlenstoffatomen bedeutet, oder einen Aralkylrest mit 1 bis 25 Kohlenstoffatomen in der Alkylkette, und einer der Reste auch ein Wasserstoffatom sein kann, sowie Verfahren zu ihrer Herstellung. Die erfindungsgemässen Verbindungen zeigen eine ausgeprägte, mit der Wirkung von Cyclophosphamid vergleichbare Antitumor-Wirkung.

EP 0 098 601 A1

Die Erfindung betrifft neue Derivate des N.N-Bis-(2-chloräthyl)-phosphorsäureamids, die insbesondere eine ausgeprägte Antitumor-Wirkung besitzen.

Das Cyclophosphamid ist ein bewährtes Cytostatikum, welches unter verschiedenen Bezeichnungen im Handel erhältlich ist. Die cancerotoxische Selektivität der N-2-Chlor-äthylamido-oxaza-phosphorine, wie Cyclophosphamid (H. Arnold und F. Bourseaux, Angew. Chemie 70 (1958), 539) ist eng an die spezielle Ringstruktur des Oxaza-phosphorin-Ringes mit einer Propanolamin-phosphorsäureester-Gruppierung gebunden. Es liegt hier das Prinzip einer Transport-Wirkform vor. Die Transportform der Cyclophosphamide ist inaktiv, ihre Aktivierung muß in der Leber erfolgen. Als Wirkform der Cyclophosphamide wird das Phosphorsäurediamid der Formel

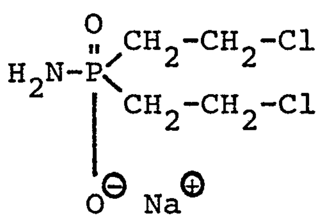

angenommen.

Aufgabe der vorliegenden Erfindung war es nun, die Aktivierung in der Leber zu umgehen und allgemeine Aktivierungsprinzipien auszunutzen, wie beispielsweise geringe pH-Differenzen zwischen Normal- und Tumorzellen. Diese Aufgabe wird mit der vorliegenden Erfindung gelöst.

Gegenstand der Erfindung sind Derivate des N.N-Bis-(2-chloräthyl)-phosphorsäureamids der allgemeinen Formel I

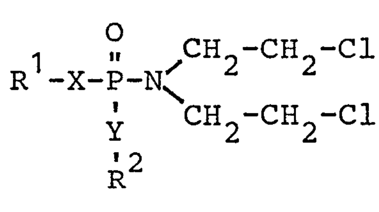

(I)

worin X und Y gleich oder verschieden sind und O oder $NR^3$ bedeuten, $R^1$ und $R^2$ gleich oder verschieden sind und $R^1$ den Rest $CH_2(OR^4)-CH_2-CH_2-$, $CH_2(OR^4)-CH(CH_3)-CH_2-$ und insbesondere den Rest $CH_2(OR^4)-CH(OR^5)-CH_2-$ bedeutet, und, wenn X eine $NR^3$-Gruppe ist, auch Wasserstoff sein kann, $R^2$ eine der Bedeutungen von $R^1$ besitzt und vorzugsweise Äthyl, Propyl, Allyl, Propenyl, Chloräthyl und insbesondere Benzyl und in erster Linie Methyl ist, $R^3$ Wasserstoff, Methyl, Äthyl, Propyl oder Allyl ist, und worin die Reste $R^4$ und $R^5$ gleich oder verschieden sind und einen Alkylrest R oder einen Acylrest -COR darstellen, wobei R eine geradkettige oder verzweigte gesättigte oder ungesättigte Alkylgruppe mit 1 bis 25 Kohlenstoffatomen bedeutet, oder einen Aralkylrest mit 1 bis 25 Kohlenstoffatomen in der Alkylkette bedeutet, und einer der Reste auch ein Wasserstoffatom sein kann.

Ein Alkylrest R kann verzweigt oder vorzugsweise unverzweigt sein. Als Alkylrest kann R auch substituiert sein und besitzt in einem der Reste $R^4$ oder $R^5$ vorzugsweise 1 bis 7, insbesondere 1 bis 3 Kohlenstoffatome, und im anderen Rest $R^4$ oder $R^5$ 16 bis 20 Kohlenstoffatome. Ein substituierter Alkylrest R ist vorzugsweise nur in einem der Reste $R^4$ oder $R^5$ enthalten. Substituenten im Alkylrest R sind zum Beispiel Hydroxy, Halogen, Mesyloxy, Alkoxy, Alkenyloxy oder Alkinyloxy mit 3 bis 12 Kohlenstoffatomen oder Dihydroxypropyloxy.

Eine Acylgruppe -COR leitet sich insbesondere von einer natürlichen Fettsäure, wie zum Beispiel Behen-, Laurin-, Stearin-, Palmitin, Myristin-, Caprin- oder Arachinsäure ab.

In einer Aralkylgruppe R ist der Arylrest vorzugsweise ein gegebenenfalls durch Alkyl mit 1 bis 7, insbesondere 1 oder 2 Kohlenstoffatomen substituierter Phenylrest und die Alkylgruppe besitzt vorzugsweise 1 bis 4 Kohlenstoffatome. Sie ist zum Beispiel Phenäthyl und insbesondere Benzyl.

Die untereinander verschiedenen Reste $R^4$ und $R^5$ können sich auch nur in ihrer sterischen Konfiguration oder nur durch den Gehalt unterschiedlicher Isotopen, wie zum Beispiel Deuterium, Tritium, $C_{14}$ unterscheiden; vorzugsweise leiten sich die Glyceridreste, insbesondere der Rest $-CH_2(OR^4)-CH(OR^5)-CH_2-$, von den reinen stereoisomeren D- oder L-Formen ab, insbesondere von den biologisch aktiven stereoisomeren Formen.

Ein Glyceridrest $R^1$ oder $R^2$ leitet sich zum Beispiel ab von den Glycerinderivaten der Formel I der deutschen Patentanmeldung P 31 30 867, und insbesondere von den Äther-lecithinen der Formel I der DE-OS 26 19 686, von den Glycerinderivaten der Formeln II, III oder IV der deutschen Patentanmeldung der gleichen Anmelderin "Neue D-Mannitderivate als Ausgangsprodukte zur Synthese von Phospholipiden" vom gleichen Anmeldetag, wobei die Reste $R^1$ und $R^2$ in diesen Anmeldungen den Resten $R^4$ und $R^5$ im Glyceridrest entsprechen.

Besonders bevorzugt ist die Verbindung der Formel I, in der $R^1$ 3-Octadecyloxy-2-methoxy-propyl bedeutet, $R^2$ Methyl, X die NH-Gruppe und Y Sauerstoff.

Es wurde gefunden, daß die erfindungsgemäßen Verbindungen der allgemeinen Formel I eine sehr gute Antitumor-Wirksamkeit besitzen, die mit der von Cyclophosphamiden vergleichbar ist und diese, insbesondere aufgrund der geringeren Toxizität, zum Teil übertrifft. Aufgrund ihrer Struktur besitzen die erfindungsgemäßen Verbindungen insbesondere eine hohe Selektivität gegenüber Tumorzellen, mit einer deutlich verringerten schädigenden Wirkung auf gesunde Zellen.

In den erfindungsgemäßen Verbindungen der Formel I liegt die

Wirkform in einer neutralen, durch Kopplung an ein Lipidmolekül membranähnlichen Transportform vor. Aufgrund ihrer hydrophoben Gruppen werden sie leicht in die Zellmembran eingebaut. Im schwach sauren Bereich, wie er in Tumorzellen vorliegt, tritt dann eine Spaltung unter Freisetzung der cytostatisch wirksamen polaren Wirkform ein. Dadurch werden die Zellmembranen von Tumorzellen bevorzugt angegriffen, während die Membranen normaler Zellen relativ unversehrt bleiben.

Aufgrund ihrer Struktur ist es möglich, die Lipophilie oder Hydrophilie der erfindungsgemäßen Verbindungen der Formel I zu steuern und den besonderen Problemen anzupassen. Durch eine einfache Variation der Struktur (insbesondere in der Bedeutung der Reste $R^1$ und/oder $R^2$) kann außerdem auch der Übergang von der Transportform in die Wirkform nach Wunsch beschleunigt oder verlangsamt werden.

Gegenstand der Erfindung ist auch ein Verfahren zur Herstellung der Verbindungen der allgemeinen Formel I, das dadurch gekennzeichnet ist, daß man

1) N.N-Bis-(2-chlor-äthyl)-amidophosphorsäuredichlorid
   a) mit einer Verbindung $R^1$-XH umsetzt und das erhaltene Reaktionsprodukt dann mit einer Verbindung der Formel $R^2$-YH, oder
   b) mit einer Verbindung der Formel $R^2$-YH umsetzt und das erhaltene Reaktionsprodukt dann mit einer Verbindung der Formel $R^1$-XH, wobei $R^1$, $R^2$, X und Y die oben angegebene Bedeutung besitzen, oder

2) Phosphoroxychlorid mit $R^1$-XH umsetzt, das erhaltene $R^1X\text{-}POCl_2$ mit Bis-(2-chlor-äthyl)-amin umsetzt, und die erhaltene Verbindung dann mit $R^2$-YH umsetzt, wobei $R^1$, $R^2$, X und Y die oben angegebene Bedeutung besitzen.

Die einzelnen Reaktionsstufen der Verfahrensvariante 1) und 2) können unter den für solche Umsetzungen bekannten Bedingungen erfolgen. Die Umsetzung von $R^1X-POCl_2$ mit Bis-(2-chlor-äthyl)-amin erfolgt in Gegenwart einer Base, wie vorzugsweise von Triäthylamin, in einem inerten organischen Lösungsmittel, wie zum Beispiel in Dioxan, Chloroform, Tetrachlorkohlenstoff, Methylenchlorid oder vorzugsweise in Tetrahydrofuran. Beispielsweise wird die Verbindung $R^1$-XH (0,1 Mol) in 100 ml Tetrahydrofuran gelöst und bei 0°C zu $POCl_3$ (0,15 Mol), das Triäthylamin (0,12 Mol) enthält, zugetropft. Man erwärmt langsam auf 20°C, filtriert vom ausgefallenen Triäthylaminhydrochlorid ab und versetzt bei 20°C tropfenweise mit Bis-(2-chlor-äthyl)-amin (0,1 Mol) in 100 ml Tetrahydrofuran, das Triäthylamin (0,15 bis 0,2 Mol) enthält. Das erhaltene Reaktionsprodukt wird dann mit $R^2$-YH umgesetzt, zum Beispiel mit a) (für Y = O) Methanol, Äthanol oder Allylalkohol, oder b) (für Y = $NR^3$) mit Ammoniak, Methylamin oder Dimethylamin.

Die Ausgangsverbindungen für die erfindungsgemäßen Verfahren sind bekannt oder können nach an sich bekannten Methoden hergestellt werden. Bevorzugte Synthesemöglichkeiten für die Verbindungen $R^1$-XH oder $R^2$-YH, in denen $R^1$ und $R^2$ einen Glyceridrest bedeutet, werden zum Beispiel in der deutschen Patentanmeldung P 31 30 867 der gleichen Anmelderin vom 4. August 1981 oder in der deutschen Patentanmeldung der gleichen Anmelderin und mit dem gleichen Anmeldedatum "Neue D-Mannitderivate als Ausgangsprodukte zur Synthese von Phospholipiden" beschrieben, oder in der DE-OS 26 19 686 angegeben.

Gegenstand der Erfindung sind auch Arzneimittel, die eine oder mehrere der Verbindungen der Formel I als Wirkstoff enthalten. Neben den üblichen pharmazeutischen Konfektionierungs- und/oder

Verdünnungsmitteln können diese Arzneimittel neben den Verbindungen der Formel I zur Unterstützung der Therapie gegebenenfalls auch noch weitere Wirkstoffe enthalten, sofern diese mit den erfindungsgemäßen Verbindungen der Formel I zusammen keine unerwünschten Nebenwirkungen zeigen.

Die Wirksamkeit von Verbindungen der allgemeinen Formel I auf das Wachstum von Tumoren wird zweckmäßig an Tumoren in Versuchstieren bewiesen. Hierfür kommen verschiedene experimentelle Tumoren zur Verwendung, beispielsweise der Ehrlich-Ascites-Tumor, ein Methylcholanthren-induzierter Tumor und ein Myelom-Tumor in Mäusen, ferner ein chemisch induzierter Rattentumor. Die Antitumor-Substanzen werden parenteral in die tumortragenden Versuchstiere verabreicht. Bevorzugt wird die intravenöse und die intra- bzw. subkutane Applikation. Auch die orale Applizierbarkeit ist bei entsprechend höherer Dosierung des Antitumor-Mittels bei einer physiologisch verträglichen Zubereitung, zum Beispiel in Kapseln, nicht ausgeschlossen.

Als Dosierung hat sich bei der parenteralen Applikation zweckmäßig erwiesen, etwa 0,05 bis 5 mg/kg Körpergewicht einzusetzen. Um die Antitumor-Mittel über längere Zeit im Kreislauf persistieren zu lassen, ist es häufig sinnvoll, die Mittel täglich oder in zwei- bis dreitägigen Abständen zu applizieren.

Die nachfolgenden Beispiele erläutern die Erfindung weiter, ohne sie darauf zu beschränken.

## Beispiele:

### Darstellung von Aminen, die den Rest $R_1$ enthalten

Nachfolgend wird die Darstellung neuer Amine beschrieben, die einen Glyceringrundkörper oder einen Alkandiol-($\omega$,$\omega$')-Grundkörper besitzen ($R^1 = CH_2(OR^4)-CH_2-CH_2-$, $CH_2(OR^4)-CH(CH_3)-CH_2-$ oder $CH_2(OR^4)-CH(OR^5)-CH_2-$). Ausgangsprodukte sind die entsprechenden Diäther oder Monoäther, beispielsweise 1-Octadecyl-2-methyl-sn-glycerin. Die Alkoholgruppe der Diäther wird zunächst mesyliert und dann mit überschüssigem Ammoniak umgesetzt.

### Mesylierung

Der Alkohol (0,1 Mol) wird in 300 ml THF gelöst und mit Triäthylamin (0,2 Mol) versetzt. Bei 10°C wird Mesylchlorid (0,1 Mol) unter Rühren eingetropft, bis das Ausgangsprodukt nicht mehr nachzuweisen ist. Nach Zusatz von 300 ml Diisopropyläther wird mit 300 ml Wasser gewaschen, die Ätherphase über $Na_2SO_4$ getrocknet und das Lösungsmittel im Vakuum entfernt. Das zurückbleibende Öl wird direkt weiter umgesetzt.

### Aminierung

Der ölige Rückstand aus der Mesylierung (0,1 Mol) wird in 100 ml Chloroform, 300 ml DMF, 200 ml Methanol und 200 ml 25 % Ammoniak (in Wasser; 3 Mol) auf 50°C erhitzt, bis das Ausgangsprodukt vollständig umgesetzt ist. Man extrahiert mit Chloroform, entfernt das Lösungsmittel und reinigt kleinere Mengen durch Chromatographie. Die Hauptmenge wird direkt für die weiteren Umsetzungen verwendet. Die Ausbeuten liegen bei 90 %, bezogen auf den Ausgangsalkohol.

Auf diese Weise wurden die folgenden Verbindungen hergestellt:

1-Octadecyl-2-Methyl-3-Desoxy-3-Amino-sn-Glycerin
($C_{22}H_{47}N O_2$; 357,626)

ber: C 73,89 H 13,25
gef: C 74,01 H 13,34

1-Octadecyl-2-Pentyl-3-Desoxy-3-Amino-sn-Glycerin
($C_{26}K_{55}N O_2$; 413,73)

ber: C 75,48 H 13,40
gef: C 75,61 H 13,63

1-Octadecyl-2-Dodecyl-3-Desoxy-3-Amino-sn-Glycerin
($C_{33}H_{69}N O_2$; 511,92)

ber: C 77,43 H 13,59
gef: C 77,71 H 13,67

1) Darstellung der Phosphorsäurediamid-Monochloride

A) N,N-Bis-(2-chlor-äthyl)-amido-phosphorsäuredichlorid:

Phosphoroxychlorid (0,15 Mol) in 100 ml THF werden bei 10°C tropfenweise mit Bischloräthylamin (0,1 Mol) in 100 ml THF und Triäthylamin (0,15 Mol) versetzt. Nach Beendigung der Reaktion (DC-Kontrolle) wird Triäthylaminhydrochlorid abfiltriert und das Filtrat nach Zusatz von 50 ml Toluol einrotiert. Der ölige Rückstand wird sofort weiter umgesetzt.

0098601

B) N,N-Bis-(2-chlor-äthyl)-amido-N'-alkyl-amido-phosphorsäure-Monochlorid

Der ölige Rückstand (0,1 Mol) aus A) wird in 100 ml THF aufgenommen und bei 10°C tropfenweise mit Alkyl-amin (0,1 Mol) in 100 ml THF und Triäthylamin (0,2 Mol) versetzt. Nach Beendigung der Reaktion (DC-Kontrolle) wird vom Triäthylaminhydrochlorid abfiltriert und das Filtrat direkt weiter umgesetzt (siehe 2, A und B).

2) Alkoholyse oder Amidolyse der Phosphorsäurediamid-Monochloride

A) Alkoholyse: N,N-Bis-(2-chlor-äthyl)-amido-N'-alkyl-amido-phosphorsäurealkylester (Transportform)

Die Lösung in THF (B; 0,1 Mol) wird mit einem primären Alkohol (1 Mol) umgesetzt. Nach Beendigung der Reaktion (DC-Kontrolle) wird mit 200 ml Chloroform versetzt und zweimal mit 200 ml Wasser gewaschen. Das Lösungsmittel wird abgezogen und der Rückstand an Kieselgel chromatographiert. Die Ausbeuten liegen bei 90 %.

Auf diese Weise wurden die folgenden Verbindungen hergestellt:

N,N-Bis-(2-chlor-äthyl)-amido-N'-octadecylamido-phosphorsäuremethylester
$C_{23}H_{49}Cl_2N_2O_2P$; 487,55)

| | | | | |
|---|---|---|---|---|
| ber: | C 56,55 | H 10,13 | N 5,75 | P 6,35 |
| gef: | C 56,91 | H 10,24 | N 5,86 | P 6,31 |

N,N-Bis-(2-chlor-äthyl)-amido-N'-(1-octadecyl-2-methyl-3-desoxy-sn-glycerin)-3-amido-phosphorsäuremethylester ($C_{27}H_{57}Cl_2N_2O_4P$; 575,66)

ber: C 56,34 H 9,98 N 4,87 P 5,38
gef: C 56,01 H10,07 N 4,98 P 5,53

N,N-Bis-(2-chlor-äthyl)-amido-N'-(1-octadecyl-2-dodecyl-3-desoxy-sn-glycerin)-3-amido-phosphorsäuremethylester
($C_{38}H_{79}Cl_2N_2O_4$; 729,96)

ber: C 62,53 H 10,91 N 3,84 P 4,24
gef: C 62,68 H 11,06 N 4,03 P 4,32

B) Amidolyse: N,N-Bis-(2-chlor-äthyl)-N'-alkyl-N"-alkyl-phosphotriamid (Transportform)

Die Lösung in THF (B; 0,1 Mol) wird mit überschüssigem Amin (1 Mol) versetzt. Nach Beendigung der Reaktion (DC-Kontrolle) wird mit 200 ml Chloroform versetzt und zweimal mit 200 ml Wasser gewaschen. Das Lösungsmittel wird abgezogen und der Rückstand an Kieselgel chromatographiert. Die Ausbeuten liegen bei 90 %.

Auf diese Weise wurden folgende Verbindungen hergestellt:

N,N-Bis-(2-chlor-äthyl)-N'-(1-octadecyl-2-methyl-3-desoxy-sn-glycerin)-phosphorsäuretriamid
($C_{26}H_{56}Cl_2N_3O_3P$; 560,65)

ber: C 55,70 H 10,07 N 7,50 P 5,53
gef: C 55,81 H 10,14 N 7,39 P 5,24

N,N-Bis-(2-chlor-äthyl)-N'-(1-octadecyl-2-methyl-3-desoxy-sn-glycerin)-N"-methyl-phosphorsäuretriamid
($C_{27}H_{58}Cl_2N_3O_3P$; 574,674)

| | | | | |
|---|---|---|---|---|
| ber: | C 56,43 | H 10,17 | N 7,31 | P 5,39 |
| gef: | C 56,65 | H 10,26 | N 7,24 | P 5,20 |

N,N-Bis-(2-chlor-äthyl)-N'-(1-octadecyl-2-methyl-3-desoxy-sn-glycerin)-N"-dimethyl-phosphorsäuretriamid
($C_{28}H_{60}Cl_2N_3O_3P$; 588,70)

| | | | | |
|---|---|---|---|---|
| ber: | C 57,13 | H 10,27 | N 7,14 | P 5,26 |
| gef: | C 57,24 | H 10,35 | N 6,91 | P 5,01 |

N,N-Bis-(2-chlor-äthyl)-N'-(1-octadecyl-2-methyl-3-desoxy-sn-glycerin)-N"-diäthyl-phosphorsäuretriamid
($C_{28}H_{60}Cl_2N_3O_3P$; 588,70)

| | | | | |
|---|---|---|---|---|
| ber: | C 57,13 | H 10,27 | N 7,14 | P 5,26 |
| gef: | C 57,09 | H 10,41 | N 7,22 | P 5,14 |

PATENTANWÄLTE DIPL.-ING. H. WEICKMANN, DIPL.-PHYS. DR. K. FINCKE
DIPL.-ING. F. A. WEICKMANN, DIPL.-CHEM. B. HUBER
DR. ING. H. LISKA

0098601

HSMCT

8000 MÜNCHEN 86, DEN
POSTFACH 860 820
MÖHLSTRASSE 22, RUFNUMMER 98 39 21/22

Max-Planck-Gesellschaft zur Förderung der Wissenschaften e.V.,
Bunsenstraße 10, 3400 Göttingen

---

Derivate des N.N-Bis-(2-chlor-äthyl)-phosphorsäure-amids

---

## Patentansprüche

1. Derivate des N.N-Bis-(2-chlor-äthyl)-phosphorsäureamids der allgemeinen Formel I

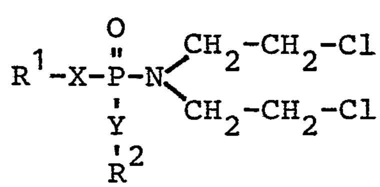

(I)

worin X und Y gleich oder verschieden sind und O oder $NR^3$ bedeuten, $R^1$ und $R^2$ gleich oder verschieden sind und $R^1$ den Rest $CH_2(OR^4)-CH_2-CH_2-$, $CH_2(OR^4)-CH(CH_3)-CH_2-$ oder $CH_2(OR^4)-CH(OR^5)-CH_2-$ bedeutet und, wenn X eine $NR^3$-Gruppe ist, auch Wasserstoff sein kann, $R^2$ eine der Bedeutungen von $R^1$ besitzt oder Äthyl, Propyl, Allyl, Propenyl, Chloräthyl, Benzyl oder Methyl ist, $R^3$ Wasserstoff, Methyl, Äthyl, Propyl oder Allyl ist und worin die Reste $R^4$ und $R^5$ gleich oder verschieden sind und einen Alkylrest R oder einen Acylrest -COR darstellen, wobei R eine geradkettige oder verzweigte gesättigte oder ungesättigte Alkylgruppe mit 1 bis 25 Kohlenstoffatomen bedeutet, oder einen Aralkylrest mit 1 bis 25 Kohlenstoffatomen in der Alkylkette bedeutet, und einer der Reste auch ein Wasserstoffatom sein kann.

2. Verbindungen nach Anspruch 1, dadurch gekennzeichnet, daß $R^1$ und/oder $R^2$ den Rest $CH_2(OR^4)-CH(OR^5)-CH_2-$ bedeuten, worin $R^4$ und $R^5$ die in Anspruch 1 angegebene Bedeutung besitzen.

3. Verbindungen nach Anspruch 1 oder 2, dadurch gekennzeichnet, daß $R^2$ Benzyl oder insbesondere Methyl ist.

4. Verbindung nach Anspruch 1, dadurch gekennzeichnet, daß $R^1$ 3-Octadecyloxy-2-methoxy-propyl, $R^2$ Methyl, X die NH-Gruppe und Y Sauerstoff bedeutet.

5. Verfahren zur Herstellung der Verbindungen der Formel I nach einem der Ansprüche 1 bis 4, dadurch gekennzeichnet, daß man

1) N.N-Bis-(2-chlor-äthyl)-amidophosphorsäuredichlorid
   a) mit einer Verbindung $R^1$-XH umsetzt und das erhaltene Reaktionsprodukt danach mit einer Verbindung der Formel $R^2$-YH, oder
   b) mit einer Verbindung der Formel $R^2$-YH umsetzt und das erhaltene Reaktionsprodukt mit einer Verbindung der Formel $R^1$-XH umsetzt, wobei $R^1$, $R^2$, X und Y die in den Ansprüchen 1 bis 4 angegebene Bedeutung besitzen, oder

2) Phosphoroxychlorid mit $R^1$-XH umsetzt, das erhaltene $R^1X-POCl_2$ mit Bis-(2-chlor-äthyl)-amin umsetzt und die erhaltene Verbindung dann mit $R^2$-YH, wobei $R^1$, $R^2$, X und Y die in den Ansprüchen 1 bis 4 angegebene Bedeutung besitzen.

6. Arzneimittel, enthaltend eine oder mehrere Verbindungen der Formel I nach einem der Ansprüche 1 bis 4.

0098601

Europäisches Patentamt

# EUROPÄISCHER RECHERCHENBERICHT

Nummer der Anmeldung

EP 83 10 6625

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| D,Y | ANGEWANDTE CHEMIE, Band 70, Nr. 17/18, 23. September 1958, Seiten 539-544 H. ARNOLD et al.: "Synthese und Abbau cytostatisch wirksamer cyclischer N-Phosphamidester des Bis-(beta-chloräthyl)-amins" * Insgesamt * | 1,6 | C 07 F 9/22<br>C 07 F 9/24<br>A 61 K 31/66 |
| Y | CH-A- 372 051 (ASTA-WERKE AG CHEMISCHE FABRIK) * Insgesamt * | 1,6 | |
| Y | GB-A-2 020 663 (A. NATTERMANN & CIE.) * Insgesamt * | 1,6 | |
| P | EP-A-0 072 531 (BEHRINGWERKE AG) * Insgesamt * | 1,6 | RECHERCHIERTE SACHGEBIETE (Int. Cl. 3) |
| | ----- | | C 07 F 9/00 |

Der vorliegende Recherchenbericht wurde für alle Patentansprüche erstellt.

| Recherchenort | Abschlußdatum der Recherche | Prüfer |
|---|---|---|
| DEN HAAG | 27-09-1983 | BESLIER L.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82